# EUROPEAN PATENT SPECIFICATION

(11) **EP 1 099 609 B1**
(45) Date of publication and mention of the grant of the patent: **01.09.2004**
(21) Application number: 00310000.5
(22) Date of filing: 10.11.2000
(51) Int. Cl.: B60S 1/40, B60S 1/52, B60S 1/54

(54) **Improvements relating to washing units for windscreen wipers**
Verbesserungen in Waschvorrichtungen für Scheibenwischer
Améliorations des unités de lavage pour essuie-glaces

(30) Priority: 12.11.1999 GB 9926679
(43) Date of publication of application: 16.05.2001
(73) Proprietor: Trico Products Corporation, Rochester Hills, MI 48309 (US)
(72) Inventor: Pathmanathan, Mahesan, Henllys, Cwmbran NP44 6EX (GB); Dancer, Nigel, Abergavenny, Gwent NP7 6LZ (GB)
(74) Representative: Britter, Keith Palmer

(56) References cited:
- EP-A- 0 337 042
- DE-A- 2 942 086
- DE-U- 8 630 990
- FR-A- 2 747 090
- US-A- 2 748 416

## Description

Washing units are provided on vehicles to enable water to be sprayed onto the windscreen and then wiped by a wiper blade. The washing unit can be fixed on the body of the vehicle with spray nozzles directed towards the windscreen. An alternative possibility is to have the wiper unit as part of the windscreen wiper so that it moves across the wind-screen together with the wiper blade. Normally this requires the overall design of the wiper blade to be fairly complex and thus expensive. Such wiper blades are normally removably mounted onto a wiper arm so that they can be detached and replaced as required. If the wiper blade incorporates a washer unit then the replacement cost will also be fairly high. It is an object of this invention to reduce this problem.

DE-U-8630990 discloses a wiper arm assembly according to the preamble of claim 1 in which a plastic cover member, placed over a connector member, incorporates washer units on either side by which washing fluid can be introduced onto the windscreen.

FR-A-2747090 discloses wiper arm assembly in which a spray bar extends along the length of a connector member, the spray bar being held in a housing on the side of the connector member. The connector member is rigidly fixed to the wiper arm yoke.

DE-A-2942086 discloses a wiper arm assembly in which the wiper arm has a plastic part running its entire length, the plastic part incorporating channels through which washer liquid can pass and be sprayed out through nozzles near the end of the wiper arm which connects to the wiper blade yoke.

Accordingly there has been provided a wind-screen washer unit forming part of a connector member adapted for pivotal location within a recess in a yoke of a wiper blade and incorporating means for releasable attachment of a wiper arm, the washer unit comprising a body having a supply line connection to a passageway within the body and outlet nozzles from the passageway for directing water onto a vehicle windscreen, but the invention is characterised in that the body is removably clipped into a housing on a side wall of the connector member.

With such an arrangement the washer unit becomes part of one of the three main parts of the windscreen wiper structure, namely the wiper arm, the wiper blade, and the connector member which links together the other two parts. The wiper blade can be of a conventional form and can be detached from the connector (for replacement by a new wiper blade) without disrupting the structure or functioning of the washer unit. Also, the connector member may require a degree of manipulation to detach it from the wiper blade. The washer unit body is removably clipped into the housing on the connector member, so that a supply pipe connected to the supply line connection of the washer unit does not have to be disturbed when the wiper blade is removed together with the connector member.

Ideally the body of the washer unit will be of streamlined external shape. The outlet nozzles can be positioned at desirable points ensuring that the sprayed water is delivered in predetermined preferred directions.

It will be appreciated, incidentally, that an air line could be connected to the supply pipe so as to create jets of air from the outlet nozzles.

The invention may be performed in various ways and a preferred embodiment thereof will now be described, by way of example, with reference to the accompanying drawings, in which:-
Figures 1 and 2 are upper and lower perspective views respectively of a combined connector and washer unit;
Figure 3 is a view of one side of the unit of Figure 1;
Figure 4 illustrates passageways within the unit of Figure 1;
Figures 5 and 6 are underneath plan and end views respectively of the unit of Figure 1; and
Figure 7 is an illustration of a connector unit with a clip for holding a washer unit, in accordance with the invention.

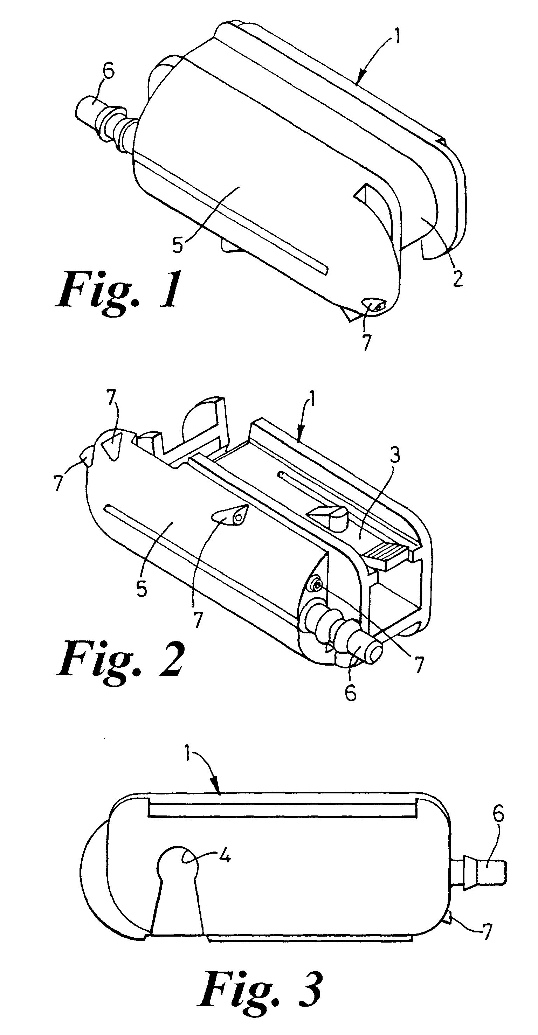

Figures 1 to 6 show a combined connector and washer unit and are incorporated here as background art to enable a better understanding of the invention.

In the unit as illustrated in Figures 1 to 6 of the drawings, there is shown generally a connector member 1 having a curved end part 2 about which can be mounted a hooked end of a wiper arm. The underneath face 3 of the connector member carries projections for connecting into the end of the wiper arm to hold it in place. The connector member 1 also has a location passageway 4 which enables it to be clipped into place on a pin within a recess in a wiper blade mounting, so that the connector can pivot with respect to the wiper blade.

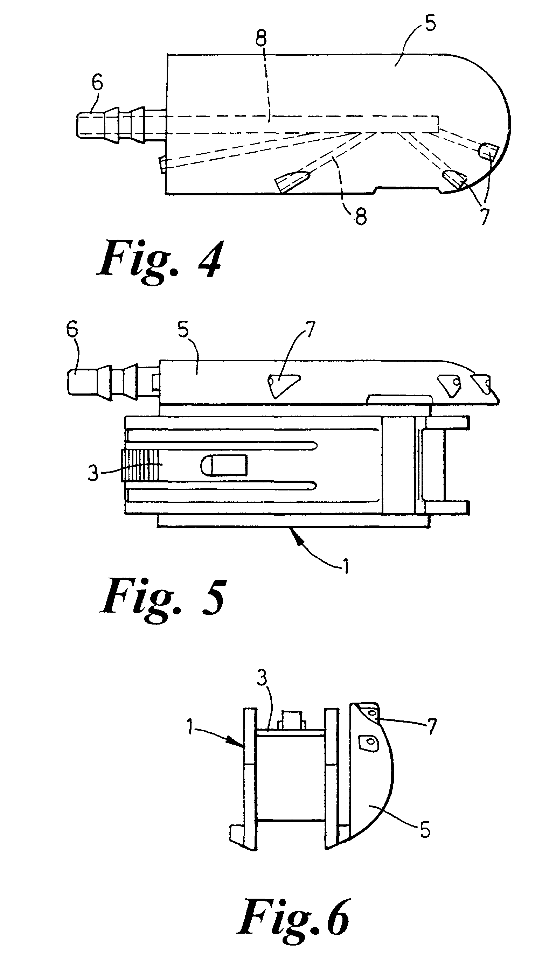

In the unit as illustrated in Figures 1 to 6 of the drawings, there is shown generally a body 5 attached to one side of the connector member 1 which acts as a washer unit. This body 5 has a supply line pipe connection 6 and strategically placed outlet nozzles 7. As can be seen from Figure 4 there are internal passageways 8 within the body 5 which interconnect the supply line pipe connection 6 with the nozzles 7. The desired streamlined shape of the washer unit can be seen clearly from the drawings.

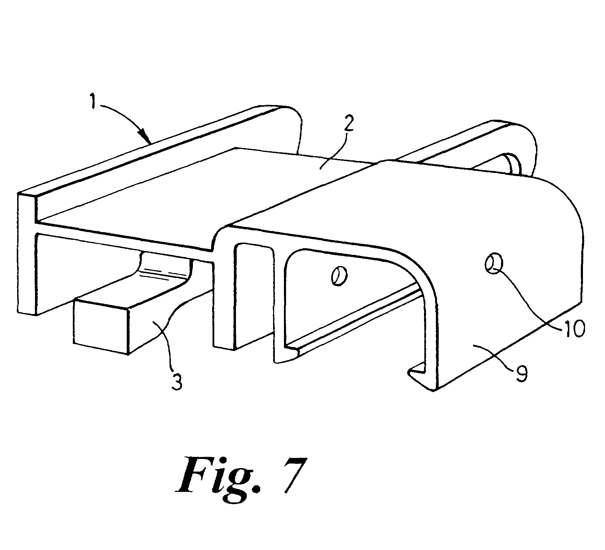

In the embodiment of the invention, as illustrated in Figure 7 of the drawings, the washer unit is constructed separately from the connector member 1. In this case, connector member 1 incorporates a projecting clip 9 into which can be slid a washer unit body which will incorporate the supply line pipe connection 6 and the interconnected outlet nozzles 7. This body will snap into place by virtue of dimples on the washer unit body fitting into holes 10 in the clip 9. However, when required, the washer unit body could be detached from the clip 9 so that the connector member 1 can be taken away from the wiper arm without having to disconnect the washer unit from a water supply connecting pipe.

## Claims

1. A windscreen washer unit forming part of a connector member (1) adapted for pivotal location within a recess in a yoke of a wiper blade and incorporating means for releasable attachment of a wiper arm, the washer unit comprising a body having a supply line connection (6) to a passageway (8) within the body and outlet nozzles (7) from the passageway (8) for directing water or air onto a vehicle windscreen, **characterised in that** the washer unit body is removably clipped into a housing (9) on a side wall of the connector member (1).

2. A washer unit according to claim 1, wherein the body of the washer unit is of streamlined external shape.

3. A washer unit according to claim 1 or 2, wherein the outlet nozzles (7) are positioned at points ensuring that the sprayed water is delivered in predetermined preferred directions.

4. A washer unit according to claim 1, 2 or 3, wherein a water line or an air line is connected to the supply line connection (6), so as to create jets of water or air from the outlet nozzles (7).

## Patentansprüche

1. Scheibenwaschanlageneinheit, die Teil eines Anschlusselements (1) bildet, welches für eine schwenkbare Anordnung In einer Aussparung in einem Bügel eines Wischblattes angepasst Ist und eine Einrichtung zur lösbaren Befestigung eines Wischarmes beinhaltet, wobei die Waschanlageneinheit einen Körper mit einer Förderleitungsverbindung (6) zu einem Durchgang (8) in dem Körper und Auslassdüsen (7) aus dem Durchgang (8) aufweist, um Wasser oder Luft auf eine Fahrzeug-Windschutzscheibe zu richten, **dadurch gekennzeichnet, dass** der Körper der Waschanlageneinheit lösbar In ein Gehäuse (9) an einer Seitenwand des Anschlusselements (1) verrastet ist.

2. Waschanlageneinheit nach Anspruch 1, wobei der Körper der Waschanlageneinheit äußerlich stromlinienförmig ist.

3. Waschanlageneinheit nach Anspruch 1 oder 2, wobei die Auslassdüsen (7) an Stellen angebracht sind, in welchen sichergestellt Ist, dass das Sprühwasser in vorbestimmte bevorzugte Richtungen zugeführt wird.

4. Waschanlageneinheit nach Anspruch 1, 2 oder 3, wobei eine Wasserleitung oder eine Luftleitung mit der Förderleitungsverbindung (6) so verbunden ist, dass Wasser- oder Luftstrahlen aus den Auslassdüsen (7) erzeugt werden.

## Revendications

1. Unité de lavage de pare-brise formant une partie d'un connecteur (1) adapté à être placé en position central dans une cavité d'un support de lame d'essuie-glace et incorporant des moyens d'attachement libérables d'un bras d'essuie-glace, l'unité de lavage comportant un corps ayant une connexion (6) d'une ligne d'alimentation à un passage (8) situé dans le corps et des buses de sortie (7) du passage (8) pour diriger l'eau ou l'air sur un pare-brise de véhicule, **caractérisé en ce que** le corps de l'unité de lavage est attaché de manière démontable dans un logement (9) sur une paroi latérale du connecteur (1).

2. Unité de lavage selon la revendication 1, dans laquelle le corps de l'unité de lavage a une forme externe profilée.

3. Unité de lavage selon la revendication 1 ou 2, dans laquelle les buses de sortie (7) sont placées en des points assurant que l'eau pulvérisée est délivrée selon des directions préférentielles prédéterminées.

4. Unité de lavage de selon la revendication 1, 2 ou 3, dans laquelle une conduite d'eau ou une conduite d'air est reliée à la connexion (6) de la ligne d'alimentation, afin de créer des jets d'eau ou d'air à partir des buses de sortie (7).
